# EUROPEAN PATENT APPLICATION

(11) **EP 4 576 543 A1**
(43) Date of publication of application: **25.06.2025**
(21) Application number: 23218582.7
(22) Date of filing: 20.12.2023
(51) Int. Cl.: H02M 7/162, H02M 1/08, H02M 1/32, H02M 1/36, H02M 7/12

(54) **ELECTROLYSIS SYSTEM AND ENERGY CONVERSION ARRANGEMENT WITH INRUSH CURRENT MITIGATION**

(71) Applicant: Siemens Energy Global GmbH & Co. KG, 81739 München (DE)
(72) Inventor: Lukianov, Semen, 91058 Erlangen (DE); Loku, Fisnik, 90768 Fürth (DE)

(57) **Abstract**

An energy conversion arrangement 100 with inrush current mitigation for an electrolysis system 150 comprises a switching module 102 connected to an AC power source 108 for receiving phase-voltage signals 110 differing by defined phase-shifts, and configured to switch on and off transmission of each of these signals individually depending on switching signals 116 received at a control-input interface 114, a transformer system 120 connected to receive the phase-voltage signals 110 and provide corresponding secondary-side phase-voltage signals 118, 126, a sensor module 128 configured to sense the phase-voltage signals 110, an AC/DC converter system 130 that receives the secondary-side phase-voltage signals 118, 126 and provides DC current to a high-power load, and comprises thyristor-rectifier units 132, 134 and synchronization control circuits 136, 138 for providing thyristor gate-pulses to the thyristor-rectifier units 132, 134 at firing angles synchronized with synchronization voltage signals 140, and a controller unit 142 connected to sensor module 128 and synchronization control circuits 136, 138 and configured to provide the synchronization voltage signals 140 corresponding to the phase-voltage signals 110, and to provide the switching signals 116 based on switching-delay times determined such that each individual phase current flow starts or stops when the corresponding phase-voltage signal is at a positive or negative maximum peak value.

## Description

The present disclosure in general relates to smooth energization and de-energization of energy conversion arrangements dedicated to the conversion of electrical energy to supply high-power loads. More particularly, the present disclosure relates to an energy conversion arrangement with inrush current mitigation for providing direct current (DC) to a high-power load such as a set of electrolyser units, and to an electrolysis system. Further, the present disclosure relates to a method for mitigating inrush current in an energy conversion arrangement and to a computer program product.

Electrolysis is a process of using electricity to split water into hydrogen and oxygen. This reaction takes place in a unit called an electrolyser, e.g., a polymer electrolyte membrane (PEM) electrolyser unit, and requires the supply of direct current (DC). An electrolysis system may comprise a set, i.e., one or more, potentially many more, electrolyser units. Such sets of electrolyser units constitute a high-power load and may have a high current demand of DC current, e.g., 7-10 kA.

AC to DC converter systems used for providing such DC currents make use of power electronics components for rectifying transformed alternating current (AC) received from an AC power source, in particular an AC power grid, i.e., an electric network, e.g., a public AC power grid or an island grid. Suitable reliable rectifier circuits are, for example, thyristor-based rectifiers.

A thyristor is a solid-state semiconductor device suitable for high-power applications that acts as a bistable switch which conducts when its gate electrode receives a current trigger signal, i.e., a firing angle signal, as the thyristor gate signal, and continues to conduct until the voltage across the device is reverse-biased or removed. The firing angle of the thyristor is the angle at which it is triggered by the firing angle signal. A thyristor-based rectifier, i.e., a thyristor rectifier, is or comprises, for example, a bridge rectifier built with thyristors.

An energy conversion arrangement refers to an AC to DC converter system coupled to a transformer system for receiving alternating currents from the transformer system that is connected to an AC power supply.

Thyristor-based rectifiers allow control of the active power flow to the set of electrolyser units, which may be considered as a non-linear high-power load, by changing the thyristor firing angles, i.e., by using defined firing angle signals (thyristor gate pulses) for the gate activation of the thyristors of the rectifier circuits.

Green hydrogen production, i.e., the production of hydrogen using renewable energy, such as electrical energy generated using wind turbines, is increasing due to efforts to decarbonize energy production. Therefore, the number of installed electrolysis systems connected to power grids continuously increases. In order to accelerate green hydrogen production, the overall capacity of planned electrolysis system projects is in the Giga-Watt range.

Alternatively to being connected to a public AC power grid, an electrolysis system can, for example, be provided integrated in a system with an existing renewable energy source or connected to an island grid. These types of systems are characterized by a relatively low value of short-circuit power, which makes these systems weak and sensitive to internal transient processes, although, in order to fulfil the requirements of grid operators, modern electrolysis systems should be flexible in operation and should be able to be disconnected from and connected to the grid depending on different operation conditions.

A severe transient process in the electrolysis system is the energization of the energy conversion arrangement, in particular of the rectifier transformer, i.e., the transformer system, when the connection to the power grid is enabled, which may result in high-magnitude, harmonic-rich inrush currents. These inrush currents may have amplitudes 7-10 times the nominal current values of the transformer system. These high inrush currents may become a reason for temporary overvoltages or undervoltages in the system, which in turn may have negative effects such as failure of equipment and accelerated insulation aging.

Apart from parameters determined by the available power grid, the severity and amplitude of inrush currents also depends on parameters of the energy conversion arrangement, in particular on parameters of the transformer system, such as the construction of the transformer core and the amount of flux in the transformer core, as well as the exact time instant when the transformer system is energized.

Particularly, residual flux remaining in the transformer core after de-energization of the transformer system when the connection to the power grid is disabled, may drive high inrush currents during a subsequent energization of the transformer.

As described in John H. Brunke and Klaus J. Fröhlich, IEEE Transactions on Power Delivery, Vol. 16, No. 2, April 2001, pp. 276-280: "Elimination of Transformer Inrush Currents by Controlled Switching - Part I: Theoretical Considerations", controlling the time instant when energization of a transformer takes place is a means for controlling the flux and thereby a possibility to influence inrush currents.

Negative effects caused by high inrush currents can be reduced in a general way by requiring a minimum grid strength in terms of available short-circuit power of the network, to which an energy conversion arrangement with a transformer system, e.g., of an electrolysis system, is to be connected. Furthermore, additional special controlled switching apparatuses such as Siemens SIPROTEC 5 may be used for providing a functionality of controlled switching in order to energize a transformer system in a controlled way.

However, due to their high price and complexity such controlled switching apparatuses are often installed on high voltage level or used to control circuit breaker switches only of transformer units most sensitive to high inrush currents. Until now electrolysis systems are not equipped with circuitry, which can provide controlled switching functionality or control logic suitable for controlled transformer energization to reduce inrush currents.

It is an objective of the present invention to provide an inexpensive possibility using means of an energy conversion arrangement, for mitigating inrush currents during energization of a transformer system of the energy conversion arrangement that generates DC current for a high-power load such as a set of electrolyser units, from an AC power source.

This objective is solved by an energy conversion arrangement as stated in claim 1 and an electrolysis system as stated in claim 11. A corresponding method for mitigating inrush current in an energy conversion arrangement and a computer program product are disclosed in claims 12 and 16, respectively. Advantageous additional embodiments of the invention are disclosed in the respective dependent claims.

According to a first aspect of the invention, an energy conversion arrangement with inrush current mitigation is provided, which comprises a switching module having an input interface connected via a point-of-connection (POC), i.e. a point-of-common-coupling, to an AC power source for receiving a plurality of phase voltage signals differing at least by defined phase-shifts, an output interface and a control input interface, wherein the switching module is configured to switch on and switch off transmission of each of said plurality of phase voltage signals individually to the output interface depending on a plurality of switching signals received at the control input interface.

Further, the energy conversion arrangement comprises a transformer system having a primary side interface connected to the output interface, for receiving the plurality of phase voltage signals, and a secondary side interface for providing a corresponding plurality of secondary side phase voltage signals, a sensor module configured to sense the plurality of phase voltage signals at the point-of-connection (POC), and an AC to DC converter system connected to receive the plurality of secondary side phase voltage signals and connectable (or connected) to provide DC current to a high-power load, wherein the AC to DC converter system comprises one or more thyristor rectifier units and synchronization control circuits configured to provide thyristor gate pulses to the thyristor rectifier units at firing angles synchronized with synchronization voltage signals.

Furthermore, the energy conversion arrangement comprises a controller unit connected at least to the sensor module and the one or more synchronization control circuits. The controller unit is configured to provide the synchronization voltage signals corresponding to the plurality of phase voltage signals sensed at the point-of-connection (POC), and it is further configured to provide the plurality of switching signals based on switching delay times determined such that each individual phase current flow starts or stops when the corresponding phase voltage signal is at a positive maximum peak value or a negative maximum peak value.

The switching delay times at least partly depend on physical parameters of the energy conversion arrangement.

For energization, the switching signals may preferably be provided such that each individual phase current flow starts when the corresponding phase voltage signal is at a positive maximum peak value. For de-energization, the switching signals may preferably be provided such that each individual phase current flow stops when the corresponding phase voltage signal is at a negative maximum peak value.

The switching module may be a circuit breaker module, and can be closed or opened depending on the network situation, e.g., in case of a fault, such as when the voltage at the POC has not recovered after 1-2 s, triggered by a commutation of a switching signal sent by the controller unit. Here, the switching module is configured to switch on and switch off, i.e., enable and disable, transmission of each of the phase voltage signals individually, i.e., separately, independently from the others.

The term "plurality of phase voltage signals" refers to multiple voltage signals having different phase-shifts (or phase offsets or phase delay times) distributed in a polyphase system for distributing electric AC power. For example, three-phase electric AC power may be distributed, where the plurality comprises three phase voltage signals which differ by phase shifts of 120 and 240 degrees, respectively.

A transformer system comprises a set, i.e., one or more, rectifier transformers, i.e., transformers.

A thyristor rectifier unit consists of or comprises a thyristor rectifier, i.e., a rectifier circuit built from thyristors, wherein the term "unit" merely takes into account that other circuitry, such as resistors, may be part of the circuit. A rectifier circuit may, for example, be a bridge rectifier circuit. The AC to DC converter system further comprises (or is connected to) one or more synchronization control circuits, i.e., control units, configured to provide thyristor gate pulses to the thyristor rectifier units at firing angles synchronized with the synchronization voltage signals. In an embodiment, the synchronization control circuits are implemented as phase-locked-loop circuits, i.e., as phase-locked-loop control logic, as control units. The synchronization control circuits may be provided as separate circuits or as a single circuit configured to provide all the required thyristor gate pulses, i.e., firing angle signals, for the different thyristor rectifier units. In order to minimize the impact of generated harmonics, multiple rectifiers are connected such as to reduce or cancel out the generated harmonics, thereby forming a multipulse rectifier system, e.g., a 24-pulse rectifier system.

The synchronization voltage signals correspond to the plurality of phase voltage signals sensed at the point-of-connection (POC) in that the controller unit is configured to generate the synchronization voltage signals from the sensed phase voltage signals sensed at the POC by applying constant, known phase-shifts that correspond to the phase-shifts, e.g. ±30°, between the secondary side voltages delivered from the rectifier transformers of the transformer system to firing angles resulting from the control units of the thyristor rectifier units. If the synchronization voltage signals are generated. e. g., as digital signals, the application of these pre-defined phase shifts can be implemented as a simple addition, otherwise the phase-shift may be implemented, e.g., using delay circuits. The synchronization voltage signals may be generated as pulse sequences, i.e., sequences of firing pulses, suitably timed according to the pre-defined phase shifts. In other words, the controller unit uses the phase voltage signals sensed at the POC, which are additionally shifted by the pre-defined phase-shifts, to generate firing pulse signals.

Hence, on the one hand, the controller unit of the energy conversion arrangement is configured to provide the synchronization voltage signals corresponding to the plurality of phase voltage signals sensed at the POC, i.e., the voltage at the POC is used for synchronization purposes for the synchronization control circuits, e.g., phase-locked-loops (PLL), of the rectifier units of the AC to DC converter system. On the other hand, the controller unit is configured to provide the plurality of switching signals based on switching delay times determined such that each individual phase current flow starts or stops when the corresponding phase voltage signal is at a positive maximum peak value or a negative maximum peak value, which will result in minimized or zero inrush current. Since the switching delay times can be determined based on physical parameters of the energy conversion arrangement, the maximum peak values of the same phase voltage signals sensed at the POC and used for determining the firing angle signals for the rectifier units can be used for determining the best commutation moment, i.e. the best instant and order for closing and opening of each phase at the switching module, i.e., the best time for setting the switching signal, and order for each phase to make energization of the transformer system soft with mitigated or zero inrush currents. If all parameters are known, it is possible to determine from the sensed phase voltage signal in what exact time and order each phase should be commutated to mitigate inrush currents.

While the switching strategy applied by the controller unit for mitigating inrush currents can be applied for energization of the transformer system, it can also be applied for de-energization of the transformer system in order to achieve a reduced and preferably negligible value of residual flux in the core of the transformer, since otherwise residual flux remaining in the transformer core will drive additional inrush current during subsequent energization. Residual flux may otherwise appear due the fact that the transformer core is made of ferromagnetic materials, and a closed magnetic circuit, which appears after de-energization of the transformer system, can retain the flux in the core even for a long time, for weeks or even months depending on conditions of the transformer environment. Therefore, even if the transformer system is energized after a long period of time, e.g., after several days, residual flux may drive inrush currents.

In an embodiment of the energy conversion arrangement, the controller unit is configured to provide a first switching signal based on a first switching delay time determined such that a first individual phase current flow starts or stops when the corresponding first phase voltage signal is at a positive maximum peak value or a negative maximum peak value, and to provide a second and a third switching signal based on the first switching delay time plus additional pre-defined second and third phase delay times. This allows controlled energization and de-energization by switching each phase signal individually based on merely determining a positive maximum or negative maximum (i.e., minimum) peak voltage of one of the phase voltage signals. The usage of the first phase voltage signal being equal to the positive maximum peak value for energization may be implemented, e.g., by adding an additional protection logic to the controller unit, that waits for a state, when the phase to ground voltage sensed as the first phase voltage signal is equal to the positive maximum peak value. Then, signals for commutation of two remaining phases are sent with already specified switching delay times or delay angles. For example, when the first phase is commutated at maximum voltage peak, the switching signal for commutation of the second phase is sent 6.66 ms (120 electrical degrees) later and 13.33 ms (240 electrical degrees) later for the third phase. The usage of the first phase voltage signal being equal to the negative maximum peak value for de-energization may be implemented, e.g., by adding an additional protection logic to the controller unit, that waits for a state, when the phase to ground voltage sensed as the first phase voltage signal is equal to the negative maximum peak value. Then, signals for commutation of two remaining phases are sent with already specified delay time or delay angle. For example, when the first phase is opened at minimum voltage peak, switching signals for commutation of the second and third phases can be sent delayed by 5 ms (90 electrical degrees). By following the specified de-energization strategy, the residual flux of the core can be reduced or kept close to zero. By combining controlled de-energization with controlled energization and subsequent energization it is possible to reduce or even remove inrush currents.

In one embodiment of the energy conversion arrangement, the controller unit is further configured to provide the plurality of switching signals for switching off transmission of the plurality of phase voltage signals individually only in a non-emergency operation state, i.e., only during planned de-energization, because there is a delay by the switching delay time and it can also take up to one cycle of the phase voltage signal to reach the time instant of peak voltage and disabled current flow. This may be too long if the system needs be de-energized in the shortest possible time, which may be the case in emergency situations, e.g., in network situations where faults occur downstream from the switching module. In such a situation, the system should be able to isolate the fault very quickly in order to minimize damage to the equipment. Therefore, the de-energization strategy that reduces residual flux and thereby subsequent inrush current during energization, is only applied in a non-emergency operation state when the introduction of additional delay time in opening of contacts of the switching module is acceptable.

For each phase, the switching delay time constitutes the time between the commutation of the switching signal by the controller unit and the actual change of state (start or stop) of the corresponding phase current flow.

In an embodiment, the switching delay times at least partly depend on a value of residual flux in the transformer system. Depending on its current polarity, flux in the transformer core influences current flow.

In an embodiment, the switching delay times at least partly depend on a construction of a transformer core of the transformer system. Knowing the construction type of the transformer core, it is possible to determine how flux is distributed inside the core and when exactly each phase should be triggered for opening or closing in relation to other phases in order to achieve a negligible value of residual flux in the core of transformer and soft energization with mitigated inrush currents.

In another embodiment, the switching delay times at least partly depend on a duration of an electric arc at the switching module. Depending on, e.g., the physical parameters of the switching module and the power switched by the switching module, an exact time of energization of the transformer system is determined taking into account that current flow can start before the respective contact of the switching module mechanically closes, which allows to determine the corresponding switching delay time more accurately and therefore enables softer energization with mitigated inrush currents.

In yet another embodiment, the switching delay times at least partly depend on closing times of the switching module. Taking into account the physical distance between switch contacts also allows to determine the corresponding switching delay time more accurately and therefore enables softer energization with mitigated inrush currents. In an example embodiment, changes to the physical distance over time or the amount of performed switching cycles are used for dynamical adaptation of the switching delay times.

In an embodiment of the energy conversion arrangement, the switching module comprises a plurality of separate phase switching units for switching each of the plurality of phase voltage signals separately. By providing the switching module, in particular a circuit breaker module, with phase-segregated switching units allows to commutate each phase separately from the others. This way it is ensured that when the switching unit of each phase closes at the suitable time instant, only a minimum available current is present at the primary side of the transformer system, which will lead to a lower value of the resulting inrush currents. In an alternative embodiment, switching modules for each phase instead of one switching module with a plurality of separate phase switching units may be used.

In another embodiment, the energy conversion arrangement further comprises an input transformer stage connected between the point-of-connection and the input interface of the switching module. The input transformer stage may, for example, comprise an adjustable transformer, e.g., for adjusting a voltage level at the POC to a medium voltage level suitable for the used switching module. In this embodiment, the transformer system comprises the input transformer stage connected to the input interface of the switching module and a rectifier transformer stage connected to the output interface of the switching module.

In an embodiment of the energy conversion arrangement, the controller unit is configured to detect a zero-crossing of at least one of the phase voltage signals and provide the switching signals depending on a time instant of the zero-crossing. Effective mitigation of inrush currents depends on the accuracy of the timing of the actual start of phase current flow simultaneously with a phase voltage signal reaching a maximum peak voltage level. However, determination of a zero-crossing of a phase voltage signal can be performed very accurately and allows to determine a suitable time instant of a maximum peak voltage level of the periodic phase voltage signal and the correct time instant of commutating the corresponding switching signal prior to the time instant of the maximum peak voltage level taking into account the corresponding switching delay time.

According to a second aspect of the invention, an electrolysis system comprises a set of electrolyser units and an energy conversion arrangement according to the first aspect of the invention and therefore implements the advantages and characteristics of the claimed energy conversion arrangement.

And according to a third aspect of the invention, a method for mitigating inrush current in an energy conversion arrangement according to the first aspect of the invention is provided. It comprises receiving, at an input interface of a switching module connected via a point-of-connection to an AC power source, a plurality of phase voltage signals differing at least by defined phase-shifts.

The method further comprises sensing, using a sensor module, a plurality of phase voltage signals at the point-of-connection, receiving, at a control input interface of the switching module, a plurality of switching signals, and switching on and switching off transmission of each of said plurality of phase voltage signals individually to an output interface of the switching module depending on the plurality of switching signals.

Further, the method comprises a step of receiving, at a primary side interface of a transformer system connected to the output interface of the switching module, the plurality of phase voltage signals and a step of providing, at a secondary side interface of the transformer system, a corresponding plurality of secondary side phase voltage signals.

And the method comprises a step of receiving, at an AC to DC converter system, the plurality of secondary side phase voltage signals and providing DC current to a high-power load, and a step of providing, using a controller unit connected at least to the sensor module and one or more synchronization control circuits of one or more thyristor rectifier units of an AC to DC converter system, synchronization voltage signals corresponding to the plurality of phase voltage signals sensed at the point-of-connection.

Furthermore, the method comprises providing, using the one or more synchronization control circuits, thyristor gate pulses to the one or more thyristor rectifier units at firing angles synchronized with the synchronization voltage signals, and providing, using the controller unit, the plurality of switching signals based on switching delay times determined such that each individual phase current flow starts or stops when the corresponding phase voltage signal is at a positive maximum peak value or a negative maximum peak value.

In one embodiment of the method, the step of providing the plurality of switching signals comprises providing a first switching signal based on a first switching delay time determined such that a first individual phase current flow starts or stops when the corresponding first phase voltage signal is at a positive maximum peak value or a negative maximum peak value, and providing a second and a third switching signal based on the first switching delay time plus additional pre-defined second and third phase delay times.

And in one embodiment, the step of providing the plurality of switching signals comprises providing the plurality of switching signals for switching off transmission of the plurality of phase voltage signals individually only in a non-emergency operation state.

In a further embodiment, the step of providing the plurality of switching signals comprises detecting a zero-crossing of at least one of the phase voltage signals and providing the switching signals depending on a time of the zero-crossing.

Further, according to a fourth aspect of the invention, a computer program product comprises code portions that, when executed on a programmable apparatus, enable the energy conversion arrangement to carry out steps of a method according to the third aspect of the invention. In other words, the computer program product comprises code portions that, when executed on the programmable apparatus, enable the energy conversion arrangement to carry out a method according to an embodiment of the invention.

The programmable apparatus may be a programmable apparatus of the energy conversion arrangement, in particular the controller unit of the energy conversion arrangement, adapted to send to, process and receive signals from different units, modules and systems of the energy conversion arrangement, e.g., sensed phase voltage signals, switching signals and firing angle signals. And according to a fifth aspect of the invention, a computer readable storage medium comprises a computer program product according the fourth aspect of the invention.

The computer program product corresponds to a computer program, at least including software code portions for performing steps of the method according to the invention when run on a programmable apparatus, such as the controller unit or other computer, for enabling the energy conversion arrangement to perform functions according to the invention.

The computer program may be provided on a computer readable storage medium, i.e., a data carrier, such as a CD, DVD, memory card or other storage medium, stored with data loadable in a memory of the programmable apparatus, wherein the data represents the computer program. As another example, the data carrier may further be a data connection, such as a telephone cable or data cable or a wireless connection.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates an example of an electrolysis system comprising an energy conversion arrangement according to an embodiment of the invention;
- Fig. 2: schematically illustrates an example of a method for mitigating inrush current in an energy conversion arrangement according to another embodiment of the invention;
- Fig. 3: schematically shows a diagram of a phase voltage signal and prospective phase current signal at the POC; and
- Fig. 4: schematically shows a diagram illustrating a process of closing a switching unit for inrush current mitigated energization of a transformer system.

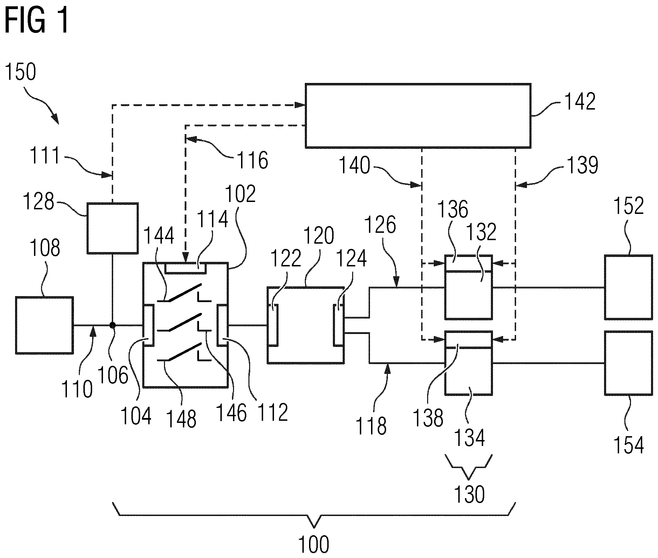

In Fig. 1, an example of an electrolysis system 150 comprising an energy conversion arrangement 100 according to an embodiment of the invention is schematically illustrated. Please note that connecting lines are shown for a single phase signal, although multiple lines for each of a plurality of signals can be present. The energy conversion arrangement 100 comprises a switching module 102, in particular a circuit breaker module, that has an input interface 104 which is connected via a point-of-connection (POC) 106 to an AC power source 108, e.g., an island grid or a public power grid, and receives a plurality of phase voltage signals 110, i.e., alternating voltage signals differing at least by defined phase-shifts. The switching module 102 further comprises an output interface 112 and a control input interface 114 and is further configured to switch on and switch off transmission of each of the plurality of phase voltage signals 110 individually to the output interface 112 depending on or controlled by a plurality of switching signals 116 received at the control input interface 114 of the switching module 102.

A transformer system 120 that has a primary side interface 122 which is connected to the output interface 112 of the switching module 102 receives the phase voltage signals 110 (if transmission has been switched on by corresponding switching signals 116), and provides a corresponding plurality of secondary side phase voltage signals 118, 126 at a secondary side interface 124.

The energy conversion arrangement 100 further comprises a sensor module 128 that is configured to sense the plurality of phase voltage signals 110 at the point-of-connection (POC) 106 or, e.g., at the input interface 104 of the switching module 102. Sensor signals 111, i.e., output signals of the sensor module 128, which correspond to the sensed phase voltage signals 110, are provided to a controller unit 142 of the energy conversion arrangement 100.

The energy conversion arrangement 100 comprises an AC to DC converter system 130 that is connected to the secondary side interface 124 of the transformer system 120 and receives the plurality of secondary side phase voltage signals 118, 126 and provides DC current to a set of electrolyser units 152, 154 (or another connected high-power load). The AC to DC converter system 130 comprises multiple (only two shown in Fig. 1) thyristor rectifier units 132, 134 and synchronization control circuits 136, 138. The synchronization control circuits 136, 138 provide thyristor gate pulses, i.e., firing angle signals 139, to the thyristor rectifier units 132, 134 at firing angles synchronized with synchronization voltage signals 140.

As shown in Fig. 1, a controller unit 142 is connected to the sensor module 102 and the synchronization control circuits 136, 138. The controller unit 142 provides the synchronization voltage signals 140 and firing angle signals 139 to the synchronization control circuits 136, 138. The synchronization voltage signals 140 correspond to the plurality of phase voltage signals 110 sensed at the point-of-connection 106, i.e., the synchronization voltage signals 140 are generated (using the sensor signals 111), from the sensed phase voltage signals 110 sensed at the POC 106 by applying constant, known phase-shifts.

And in order to control energization and de-energization of the transformer system 120 to mitigate inrush currents during energization and reduce residual flux being stored in a transformer core of the transformer system 120 after de-energization (and thereby further reduce or mitigate inrush currents during a subsequent energization), the controller unit 142 is further configured to provide the plurality of switching signals 116 based on switching delay times determined such that each individual phase current flow starts or stops when the corresponding phase voltage signal 110 is at a positive maximum peak value (or maximum amplitude) or a negative maximum peak value (or minimum peak value, minimum amplitude) .

The plurality of switching signals 116 provided by the controller unit may, for example, comprise a first switching signal generated based on a first switching delay time determined such that a first individual phase current flow starts or stops when the corresponding first phase voltage signal is at a positive maximum peak value or a negative maximum peak value. Second and a third switching signals may then be generated based on the first switching delay time plus additional pre-defined second and third phase delay times (corresponding to the phase shifts between the three phase voltage signals). For each phase, the switching delay time refers to the time between the commutation (switch on for energization of the transformer system, switch off for de-energization) of the switching signal 116 by the controller unit 142 and the delayed actual change of state (start or stop) of the corresponding phase current flow.

Switching delay times depend on parameters of the energy conversion arrangement 100, such as a value of residual flux in the transformer system 120, the construction of the transformer core of the transformer system 120, or the duration of an electric arc (if any) at the switching module 102, and overall the closing times of the switches, i.e., the switching units, of the switching module 102.

In the embodiment shown in Fig. 1, the controller unit 142 provides switching signals 116 for switching off transmission of the phase voltage signals 110 individually only in a non-emergency operation state. In other words, the delayed switching off for reduced residual flux and thereby improved de-energization is only carried out in a planned situation, whereas during emergency shutdowns switching off is carried out in the fastest possible way.

In the embodiment shown in Fig. 1, the switching module 102 comprises separate phase switching units 144, 146, 148 for switching each of the plurality of phase voltage signals 110 separately.

The shown controller unit 142 is configured to detect a zero-crossing of at least one of the phase voltage signals 110 and provide the switching signals 116 depending on a time instant of the detected zero-crossing in order to allow determination of a suitable time instant of a maximum peak voltage level of the alternating, periodic phase voltage signal and the correct time instant of commutating the corresponding switching signal prior to the time instant of the maximum peak voltage level taking into account the corresponding switching delay time.

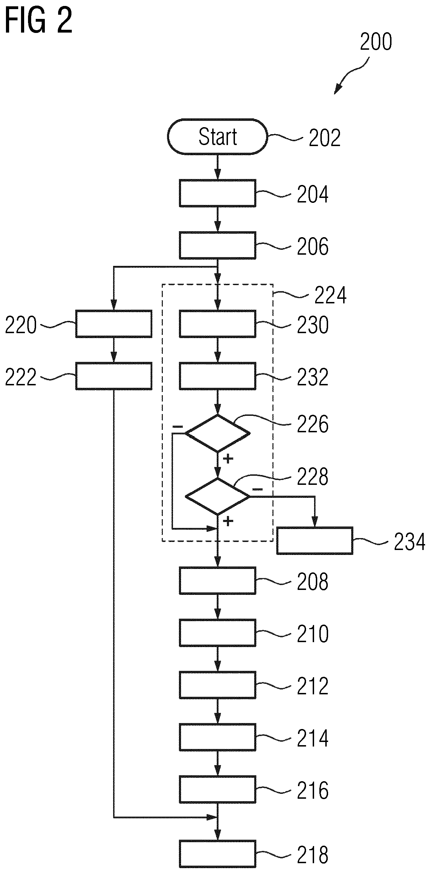

In Fig. 2, an example of a method 200 for mitigating inrush current in an energy conversion arrangement according to another embodiment of the invention is schematically illustrated. The method 200 is suitable for mitigating inrush current in an energy conversion arrangement as shown in Fig. 1. After start 202, a plurality of phase voltage signals differing at least by defined phase-shifts are received 204 at an input interface of a switching module connected via a point-of-connection to an AC power source, and a plurality of phase voltage signals are sensed 206 at the point-of-connection using a sensor module.

In a further step, a plurality of switching signals is received 208 at a control input interface of the switching module, and transmission of each of the plurality of phase voltage signals to an output interface of the switching module depending on the plurality of switching signals is individually switched on and switched off 210.

In a next step, the plurality of phase voltage signals is received 212 at a primary side interface of a transformer system connected to the output interface of the switching module, and a corresponding plurality of secondary side phase voltage signals is provided 214 at a secondary side interface of the transformer system.

In a next step, the plurality of secondary side phase voltage signals is received 216 at an AC to DC converter system, and DC current is provided 218 to a high-power load, such as a set of electrolyser units of an electrolyser system.

The step of sensing 206 a plurality of phase voltage signals at the point-of-connection using a sensor module is also followed by a step of providing 220, using a controller unit connected at least to the sensor module and one or more synchronization control circuits of one or more thyristor rectifier units of an AC to DC converter system, synchronization voltage signals corresponding to the plurality of phase voltage signals sensed at the point-of-connection, and a step of providing 222, using the one or more synchronization control circuits, thyristor gate pulses to the one or more thyristor rectifier units at firing angles synchronized with the synchronization voltage signals, in order to enable the AC to DC converter system to generate and provide 218 DC current to the high-power load.

In order to receive 208 the plurality of switching signals at a control input interface of the switching module, the step of sensing 206 a plurality of phase voltage signals at the point-of-connection using a sensor module is also followed by a step of providing 224, using the controller unit, the plurality of switching signals based on switching delay times determined such that each individual phase current flow starts or stops when the corresponding phase voltage signal is at a positive maximum peak value or a negative maximum peak value.

For example, the step of providing 224 the plurality of switching signals may comprise providing a first switching signal based on a first switching delay time determined such that a first individual phase current flow starts or stops when the corresponding first phase voltage signal is at a positive maximum peak value or a negative maximum peak value, and may further comprise providing a second and a third switching signal based on the first switching delay time plus additional pre-defined second and third phase delay times.

In the embodiment shown in Fig. 2, the step of providing 224 the plurality of switching signals comprises determining 226, if the current switching signals are signals for switching off transmission of the plurality of phase voltage signals (i.e., for de-energization of the transformer system). If not (in Fig. 2 indicated as "-"), the plurality of switching signals is provided and the method proceeds with the step of receiving 208 the plurality of switching signals. Otherwise (in Fig. 2 indicated as "+"), the method proceeds with determining 228, if the energy conversion arrangement is in a non-emergency operation state (i.e., a normal operation state). If the current state is a normal, non-emergency operation state (in Fig. 2 indicated as "+"), the plurality of switching signals for switching off transmission of the plurality of phase voltage signals individually is provided and the method proceeds with the step of receiving 208 the plurality of switching signals. However, if the current state is an emergency operation state (in Fig. 2 indicated as "-"), a fast emergency shutdown is performed 234.

Further, in the embodiment of the method shown in Fig. 2, the step of providing 224 the plurality of switching signals additionally comprises detecting 230 a zero-crossing of at least one of the phase voltage signals and providing 232 the switching signals depending on a time of the zero-crossing. In the shown embodiment, these steps are carried out before determining 226, if the current switching signals are signals for switching off transmission of the plurality of phase voltage signals.

The method may end at any time, for example when no more phase voltage signals are supplied by the AC power source or when the high-power load is disconnected from the energy conversion arrangement.

An advantage of the described approach for mitigation of inrush currents is that it could be achieved without complicated and expensive controlled switching devices or without complex and expensive solutions for increasing of the grid strength. There are merely additional expenses related to the switching unit, i.e., the circuit breaker, if it is provided with phase-segregated switching units for switching each phase signal independently. Furthermore, the proposed approach improves the stability of electrolysis systems in particular when connected to island networks, and makes it more feasible to connect electrolysis systems to a weaker grid, for which otherwise the inrush current issues would lead to unstable operation conditions.

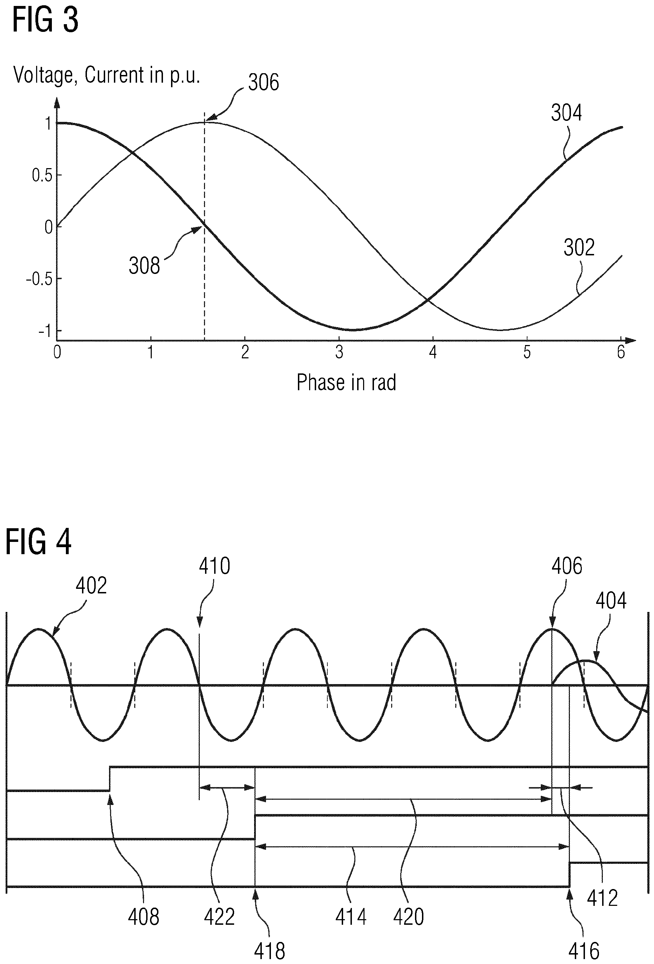

In Fig. 3, a diagram of a phase voltage signal, i.e., one of the phase signals of the voltage input at the POC, and prospective phase current signal at the POC is schematically shown. The shown phase voltage signal 302 is shown as a sinusoidal curve having maximum and minimum amplitudes, i.e., positive and negative maximum peak values. A prospective current corresponding to the phase voltage signal 302 is shown as phase-shifted sinusoidal phase current signal 304. It can be seen that phase current zero-crossing 308 corresponds to the positive maximum peak value 306 of the phase voltage signal 302.

In Fig. 4, a diagram illustrating a process of closing a switching unit for inrush current mitigated energization of a transformer system is schematically shown. Please note that only one phase voltage signal 402 and corresponding phase current signal 404 is shown. The diagram is a timing diagram that illustrates the process of closing the switch, i.e., the switching unit, at the best possible time in order to set the time instant of start of current flow 406 at the time of a positive maximum peak value of the corresponding phase voltage signal 402. At time instant 408 the controller unit receives a close command for closing the respective switching unit. However, before a corresponding switching signal to switch on current flow is generated by the controller unit, the controller unit determines the corresponding pre-defined switching delay time 420 and the time instant 410 of the next suitable zero-crossing of the phase voltage signal 402. Taking into account the wavelength of the sinusoidal phase voltage signal, the controller unit determines the time delay 422 before the time instant 418 when the switching signal is commutated and provided from the controller unit to the switching unit such that after the duration of the switching delay time 420 current flow will start exactly at time instant 406, synchronized with the phase voltage signal 402 reaching a positive maximum peak value. The switching delay time 420 may be identical to the actual closing time 414 required for closing the switch. In the diagram shown in Fig. 4, a situation is illustrated where current flow starts at time instant 406 although it is not the time instant 416 when the switch is mechanically closed. This is possible, if an electrical arc occurs that allows current flow during a pre-arc time 412 before time instant 416 when the switch is mechanically closed.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to certain sequence or order of steps, may at least partly be carried out in a different order or simultaneously. Other steps may be added and certain steps described here may be left out.

Although the invention has been illustrated and described in detail by the shown preferred embodiments, the invention is not limited by the disclosed examples and other variations can be derived therefrom by those skilled in the art without departing from the scope of the invention.

In summary, an energy conversion arrangement 100 with inrush current mitigation comprises a switching module 102 connected to an AC power source 108 for receiving phase-voltage signals 110 differing by defined phase-shifts, and configured to switch on and off transmission of each of these signals individually depending on switching signals 116 received at a control-input interface 114, a transformer system 120 connected to receive the phase-voltage signals 110 and provide corresponding secondary-side phase-voltage signals 118, 126, a sensor module 128 configured to sense the phase-voltage signals 110, an AC/DC converter system 130 that receives the secondary-side phase-voltage signals 118, 126 and provides DC current to a high-power load, and comprises thyristor-rectifier units 132, 134 and synchronization control circuits 136, 138 for providing thyristor gate-pulses to the thyristor-rectifier units 132, 134 at firing angles synchronized with synchronization voltage signals 140, and a controller unit 142 connected to sensor module 128 and synchronization control circuits 136, 138 and configured to provide the synchronization voltage signals 140 corresponding to the phase-voltage signals 110, and to provide the switching signals 116 based on switching-delay times determined such that each individual phase current flow starts or stops when the corresponding phase-voltage signal is at a positive or negative maximum peak value.

Further, an electrolysis system 150, a method 200 for mitigating inrush current in an energy conversion arrangement, and a computer program product are provided.

## Claims

1. Energy conversion arrangement (100) with inrush current mitigation, comprising
a switching module (102) having an input interface (104) connected via a point-of-connection (106) to an AC power source (108) for receiving a plurality of phase voltage signals (110) differing at least by defined phase-shifts, an output interface (112) and a control input interface (114), wherein the switching module (102) is configured to switch on and switch off transmission of each of said plurality of phase voltage signals (110) individually to the output interface (112) depending on a plurality of switching signals (116) received at the control input interface (114);
a transformer system (120) having a primary side interface (122) connected to said output interface (112), for receiving said plurality of phase voltage signals (110), and a secondary side interface (124) for providing a corresponding plurality of secondary side phase voltage signals (118, 126);
a sensor module (128) configured to sense said plurality of phase voltage signals (110) at said point-of-connection (106) ;
an AC to DC converter system (130) connected to receive said plurality of secondary side phase voltage signals (118, 126) and connectable to provide DC current to a high-power load, wherein the AC to DC converter system (130) comprises one or more thyristor rectifier units (132, 134) and synchronization control circuits (136, 138) configured to provide thyristor gate pulses to the thyristor rectifier units (132, 134) at firing angles synchronized with synchronization voltage signals (140); and
a controller unit (142) connected at least to the sensor module (128) and the one or more synchronization control circuits (136, 138) and configured to provide said synchronization voltage signals (140) corresponding to said plurality of phase voltage signals (119) sensed at the point-of-connection (106); and wherein the controller unit (142) is further configured to provide said plurality of switching signals (116) based on switching delay times determined such that each individual phase current flow starts or stops when the corresponding phase voltage signal (110) is at a positive maximum peak value or a negative maximum peak value.

2. The energy conversion arrangement as claimed in claim 1, wherein the controller unit (142) is configured to provide a first switching signal based on a first switching delay time determined such that a first individual phase current flow starts or stops when the corresponding first phase voltage signal is at a positive maximum peak value or a negative maximum peak value, and to provide a second and a third switching signal based on the first switching delay time plus additional pre-defined second and third phase delay times.

3. The energy conversion arrangement as claimed in claim 1 or claim 2, wherein the controller unit (142) is configured to provide the plurality of switching signals (116) for switching off transmission of said plurality of phase voltage signals (110) individually only in a non-emergency operation state.

4. The energy conversion arrangement as claimed in any of the preceding claims, wherein the switching delay times at least partly depend on a value of residual flux in the transformer system (120).

5. The energy conversion arrangement as claimed in any of the preceding claims, wherein the switching delay times at least partly depend on a construction of a transformer core of the transformer system (120).

6. The energy conversion arrangement as claimed in any of the preceding claims, wherein the switching delay times at least partly depend on a duration of an electric arc at the switching module (102).

7. The energy conversion arrangement as claimed in any of the preceding claims, wherein the switching delay times at least partly depend on closing times of the switching module (102) .

8. The energy conversion arrangement as claimed in any of the preceding claims, wherein the switching module (102) comprises a plurality of separate phase switching units (144, 146, 148) for switching each of the plurality of phase voltage signals (110) separately.

9. The energy conversion arrangement as claimed in any of the preceding claims, further comprising an input transformer stage connected between the point-of-connection (106) and the input interface (104) of the switching module (102).

10. The energy conversion arrangement as claimed in any of the preceding claims, wherein the controller unit (142) is configured to detect a zero-crossing of at least one of the phase voltage signals (110) and provide the switching signals (116) depending on a time instant of the zero-crossing.

11. Electrolysis system (150), comprising a set of electrolyser units (152, 154) and an energy conversion arrangement (100) as claimed in any of claims 1 to 10.

12. Method (200) for mitigating inrush current in an energy conversion arrangement as claimed in any of claims 1 to 10, comprising
Receiving (204), at an input interface of a switching module connected via a point-of-connection to an AC power source, a plurality of phase voltage signals differing at least by defined phase-shifts;
Sensing (206), using a sensor module, a plurality of phase voltage signals at the point-of-connection;
Receiving (208), at a control input interface of the switching module, a plurality of switching signals;
switching on and switching off transmission (210) of each of said plurality of phase voltage signals individually to an output interface of the switching module depending on the plurality of switching signals;
receiving (212), at a primary side interface of a transformer system connected to the output interface of the switching module, said plurality of phase voltage signals and providing (214), at a secondary side interface of the transformer system, a corresponding plurality of secondary side phase voltage signals;
receiving (216), at an AC to DC converter system, the plurality of secondary side phase voltage signals and providing (218) DC current to a high-power load;
providing (220), using a controller unit connected at least to the sensor module and one or more synchronization control circuits of one or more thyristor rectifier units of an AC to DC converter system, synchronization voltage signals corresponding to said plurality of phase voltage signals sensed at the point-of-connection;
providing (222), using the one or more synchronization control circuits, thyristor gate pulses to the one or more thyristor rectifier units at firing angles synchronized with the synchronization voltage signals; and
providing (224), using the controller unit, said plurality of switching signals based on switching delay times determined such that each individual phase current flow starts or stops when the corresponding phase voltage signal is at a positive maximum peak value or a negative maximum peak value.

13. The method as claimed in claim 12, wherein the step of providing (224) said plurality of switching signals comprises providing a first switching signal based on a first switching delay time determined such that a first individual phase current flow starts or stops when the corresponding first phase voltage signal is at a positive maximum peak value or a negative maximum peak value, and providing a second and a third switching signal based on the first switching delay time plus additional pre-defined second and third phase delay times.

14. The method as claimed in claim 12 or claim 13, wherein the step of providing (224) said plurality of switching signals comprises providing the plurality of switching signals for switching off transmission of said plurality of phase voltage signals individually only in a non-emergency operation state.

15. The method as claimed in any of claims 12 to 14, wherein the step of providing (224) said plurality of switching signals comprises detecting (230) a zero-crossing of at least one of the phase voltage signals and providing (232) the switching signals depending on a time of the zero-crossing.

16. Computer program product, comprising code portions that, when executed on a programmable apparatus, enable the energy conversion arrangement (100) to carry out steps of a method (200) according to any of the claims 12 to 15.
